# EUROPEAN PATENT APPLICATION

(11) **EP 4 786 309 A2**
(43) Date of publication of application: **05.08.2026**
(21) Application number: 26179105.7
(22) Date of filing: 07.03.2023
(51) Int. Cl.: B62B 9/08

(54) **BRAKE MECHANISM AND BABY CARRIER**

(30) Priority: 07.03.2022 CN 202210216879
(62) Divisional of application: 23710292.6
(71) Applicant: Wonderland Switzerland AG, 6312 Steinhausen (CH)
(72) Inventor: ZHONG, Zhiren, Qingxi Town, Dongguan, Guangdong, 523648 (CN)
(74) Representative: Flentje, Hanno Alexander Peter

(57) **Abstract**

A brake mechanism (22) is disclosed. The brake mechanism (22) includes a hub (100), a fixed base (200), a retainer (500), and a pedal assembly (400). The hub (100) is provided with a first engagement portion (101). The fixed base is fastened to the hub (100), and provided with a second engagement portion (102) capable of being engaged with and locked with the first engagement portion (101). The second engagement portion (102) is kept disengaged from the first engagement portion (101) when the retainer (500) is at the first position, and the second engagement portion (102) is kept engaged with and locked with the first engagement portion (101) when the retainer is at the second position. When force along a first direction is applied to the pedal assembly (400), the retainer (500) moves from the first position to the second position or from the second position to the first position.

## Description

### TECHNICAL FIELD

The present disclosure relates to the field of baby products, and in particular, to a brake mechanism and a baby carrier.

### BACKGROUND

In a common baby carrier, such as a baby carriage, a brake pedal of a brake mechanism thereof is mostly required to reciprocate to realize braking or unlocking of the baby carriage. For example, stepping down on the brake pedal makes the baby carriage brake, and when the baby carriage is to be unlocked, the brake pedal is required to be hooked up with a foot. As a result, it is very inconvenient to operate and may scratch a user's shoes.
JP 2013 256289 A discloses a bedside cabinet fixing device capable of putting casters of a bedside cabinet or the like into a locked state and in an unlocked state in a single operation 20 on a pedal and thus easily fixing and moving the bedside cabinet.
Further prior art is known from CN 105 774 888 A and US 2012/031714 A1.

### SUMMARY

According to an aspect of the present disclosure, a brake mechanism is provided. The brake mechanism includes a hub, a fixed base, a retainer, a pedal assembly and a first reset member. The hub is provided with a first engagement portion. The fixed base is fastened to the hub, and provided with a second engagement portion capable of being engaged with and locked with the first engagement portion. The retainer has a first position and a second position. The second engagement portion is kept disengaged from the first engagement portion when the retainer is at the first position, and the second engagement portion is kept engaged with and locked with the first engagement portion when the retainer is at the second position. When the retainer is at the first position, and force along a first direction is applied to the pedal assembly, the retainer moves from the first position to the second position, and when the retainer is at the second position, and the force along the first direction is applied to the pedal assembly, the retainer moves from the second position to the first position. The first reset member constantly keeps the pedal assembly moving in a direction opposite to the first direction.

In an embodiment, the pedal assembly includes a pedal body and a driving inclined surface connected to each other, and when the retainer is at the first position, and the force along the first direction is applied to the pedal body, the driving inclined surface moves along the first direction and drives the second engagement portion to be engaged with and locked with the first engagement portion.

In an embodiment, the retainer is movably arranged on the fixed base, a moving direction of the retainer is intersected with a moving direction of the second engagement portion, and when the retainer is at the second position, the retainer acts on the second engagement portion to cause the second engagement portion to move towards a direction close to the first engagement portion.

In an embodiment, the brake mechanism further includes a second reset member keeping the retainer moving towards the second position.

In an embodiment, the pedal assembly includes a pedal body and a first abutting portion connected to each other, and the retainer has a second abutting structure. The first abutting portion abuts against the second abutting structure when the retainer is at the second position.

In an embodiment, the pedal assembly further includes a rotating frame connected to the pedal body, the rotating frame is rotatably arranged on the fixed base, the first abutting portion is arranged on the rotating frame, the rotating frame is further provided with a driving inclined surface spaced apart from the first abutting portion, and when the retainer is at the first position, and the force along the first direction is applied to the pedal body, the driving inclined surface moves along the first direction and drives the second engagement portion to be engaged with and locked with the first engagement portion.

In an embodiment, the first engagement portion is a brake hole arranged on the hub, and the second engagement portion is a brake pin movably arranged on the fixed base. The brake pin is capable of being inserted into the brake hole.

In an embodiment, the brake mechanism further includes a drive member arranged at an end of the brake pin away from the brake hole. The retainer abuts against an end of the drive member away from the brake hole when the retainer is at the second position.

In an embodiment, the brake mechanism further includes a third reset member arranged around the brake pin. Two ends of the third reset member abuts against the fixed base and the drive member respectively.

In an embodiment, the brake pin is provided with a guide post, and the drive member is provided with a guide groove. The guide post is inserted into the guide groove and slidable along the guide groove.

In an embodiment, the brake mechanism further includes a fourth reset member, the drive member is provided with an accommodating groove, the brake pin is movably arranged in the accommodating groove, and two ends of the fourth reset member abuts against the brake pin and a base of the accommodating groove respectively.

In an embodiment, the brake mechanism further includes an indication assembly adapted to be in a first indication state when the retainer is at the first position, and to be in a second indication state when the retainer is at the second position.

In an embodiment, the brake mechanism further includes a decorative cover covering the fixed base, and the indication assembly includes an indication window arranged on the decorative cover and an indicator fastened to the retainer. The indicator has a first indication region and a second indication region. The first indication region is aligned with the indication window when the retainer is at the first position, and the second indication region is aligned with the indication window when the retainer is at the second position.

According to another aspect of the present disclosure, a baby carrier is provided. The baby carrier includes a wheel assembly provided with the brake mechanism described above.

In an embodiment, the baby carrier further includes a linking member. Two wheel assemblies are provided. The two wheel assemblies are each provided with the brake mechanism, and two ends of the linking member are connected to the pedal assemblies of the two wheel assemblies respectively.

### BRIEF DESCRIPTION OF THE DRAWINGS

FIG. 1 is a schematic structural diagram illustrating a baby carrier according to an embodiment of the present disclosure.
FIG. 2 is a schematic structural diagram illustrating the baby carrier shown in FIG. 1 from another perspective.
FIG. 3 is an enlarged view of portion A in FIG. 2, that is, an enlarged view of a right-rear-wheel wheel assembly of the baby carrier.

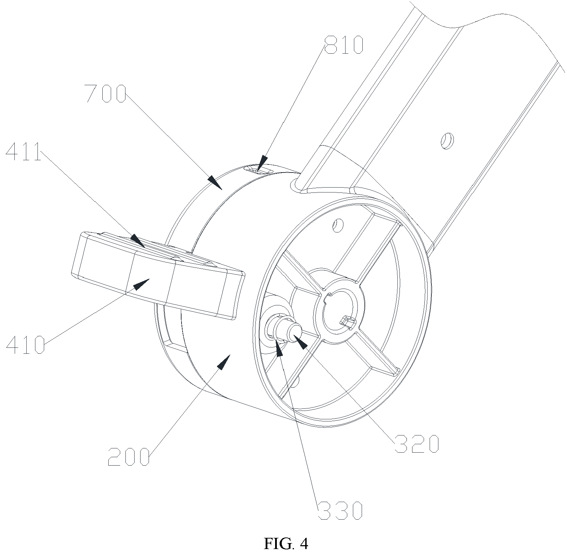

FIG. 4 is a schematic diagram illustrating a partial structure of FIG. 3.
FIG. 5 is a schematic diagram illustrating another partial structure of FIG. 3.
FIG. 6 is a schematic structural diagram of FIG. 4 in the case of omission of a decorative cover, in which case a retainer is at a first position, a wheel assembly is in an unlocked state, and a pedal assembly is in a state of not being stepped on.
FIG. 7 is an enlarged view of portion B in FIG. 6.
FIG. 8 is another schematic structural diagram of FIG. 4 in the case of omission of the decorative cover, in which case the retainer is at a second position, the wheel assembly is in a locked state, and the pedal assembly is in a state of being stepped on.
FIG. 9 is a schematic structural diagram of FIG. 8 from another perspective.
FIG. 10 is another schematic structural diagram of FIG. 4 in the case of omission of the decorative cover, in which case the retainer is at the second position, the wheel assembly is in the locked state, and the pedal assembly is in the state of not being stepped on.
FIG. 11 is a partial sectional view of FIG. 10.
FIG. 12 is a schematic structural diagram illustrating a fixed base in FIG. 10.
FIG. 13 is a schematic structural diagram illustrating a locking assembly in FIG. 10.
FIG. 14 is a sectional view of the locking assembly in FIG. 13.
FIG. 15 is a schematic structural diagram illustrating the pedal assembly in FIG. 10.
FIG. 16 is a schematic structural diagram illustrating the pedal assembly shown in FIG. 15 from another perspective.
FIG. 17 is a schematic structural diagram illustrating the retainer in FIG. 10.
FIG. 18 is a schematic structural diagram illustrating the decorative cover in FIG. 10.
FIG. 19 is a schematic structural diagram of FIG. 4 in the case of omission of the decorative cover and the fixed base, in which case a pedal is at a middle position and a drive member abuts against a driving inclined surface.
FIG. 20 is another schematic structural diagram of FIG. 4 in the case of omission of the decorative cover and the fixed base, in which case the pedal is at a stepping position and the drive member abuts against a second plane.
FIG. 21 is a schematic structural diagram of FIG. 20 from another perspective.
FIG. 22 is another schematic structural diagram of FIG. 4 in the case of omission of the decorative cover and the fixed base, in which case the pedal is at an initial position and an end of the drive member away from a brake hole is pressed by the retainer and faces toward a first plane.
FIG. 23 is a schematic structural diagram of FIG. 4 in the case of omission of the decorative cover, in which case the pedal is at the initial position, the retainer is at the first position, the right-rear-wheel wheel assembly is in the unlocked state, and the pedal assembly is in the state of not being stepped on.
FIG. 24 is a schematic structural diagram of FIG. 23 from another perspective.
FIG. 25 is a schematic structural diagram of FIG. 4 in the case of omission of the decorative cover, in which case the pedal is at the middle position and the drive member abuts against the driving inclined surface.
FIG. 26 is another schematic structural diagram of FIG. 4 in the case of omission of the decorative cover, in which case the pedal is at the stepping position, the retainer is at the second position, and the right-rear-wheel wheel assembly is in the locked state.
FIG. 27 is a schematic structural diagram of FIG. 26 from another perspective.
FIG. 28 is another schematic structural diagram of FIG. 4 in the case of omission of the decorative cover, in which case the pedal is at the initial position, the retainer is at the second position, and the right-rear-wheel wheel assembly is in the locked state.
FIG. 29 is a schematic structural diagram illustrating a brake mechanism of the right-rear-wheel wheel assembly of the baby carrier shown in FIG. 3.
FIG. 30 is a schematic diagram illustrating a brake linkage principle of a left-rear-wheel wheel assembly and the right-rear-wheel wheel assembly of the baby carrier shown in FIG. 3, in which case the pedal is at the initial position, retainers of the left-rear-wheel wheel assembly and the right-rear-wheel wheel assembly are both at the first position, and the left-rear-wheel wheel assembly and the right-rear-wheel wheel assembly are both in the unlocked state.
FIG. 31 is a schematic structural diagram of FIG. 30 from another perspective.
FIG. 32 is a schematic diagram illustrating the brake linkage principle of the left-rear-wheel wheel assembly and the right-rear-wheel wheel assembly of the baby carrier shown in FIG. 3, in which case the pedal is at the stepping position, the retainer is at the second position, and the left-rear-wheel wheel assembly and the right-rear-wheel wheel assembly are both in the locked state.

Reference signs:
10: frame; 20: wheel assembly; 21: wheel body; 22: brake mechanism; 100: hub; 110: brake hole; 120: pivot shaft; 200: fixed base; 210: pivot hole; 220: mounting groove; 221: through hole; 300: locking assembly; 310: drive member; 311: accommodating groove; 312: guide groove; 320: brake pin; 321: guide post; 330: third reset member; 340: fourth reset member; 400: pedal assembly; 410: pedal body; 411: step surface; 420: rotating frame; 421: mounting hole; 430: driving inclined surface; 440: first abutting structure; 441: abutting body; 442: first abutting portion; 451: first plane; 452: second plane; 500: retainer; 510: holding frame; 520: first pressing portion; 530: second pressing portion; 540: connecting portion; 550: second abutting structure; 551: second abutting body; 552: protective sleeve; 610: first reset member; 620: second reset member; 700: decorative cover; 800: indication assembly; 810: indication window; 820: indicator; 821: first indication region; 822: second indication region; 900: connector; 30: linking member; 101: first engagement portion; and 102: second engagement portion.

### DETAILED DESCRIPTION OF THE EMBODIMENTS

In order to make the objectives, technical solutions, and advantages of the present disclosure clearer, the present disclosure is described in further detail below with reference to the accompanying drawings and specific implementations. It should be understood that the specific implementations described herein are intended only to interpret the present disclosure and does not limit the protection scope of the present disclosure.

It should be noted that when one component is referred to as "fastened to" another component, it may be directly disposed on the another component or an intermediate component may exist. When one component is considered to be "connected to" another component, it may be directly connected to the another component or an intermediate component may co-exist. The terms "vertical", "horizontal", "left", "right" and similar expressions used herein are for illustrative purposes only, and are not meant to be unique implementations.

Unless defined otherwise, all technical and scientific terms used herein have the same meanings as would generally understood by those skilled in the technical field of the present disclosure. The terms used herein in the specification of the present disclosure are for the purpose of describing specific implementations only, and are not intended to limit the present disclosure. The term "and/or" used herein includes any and all combinations of one or more related listed items.

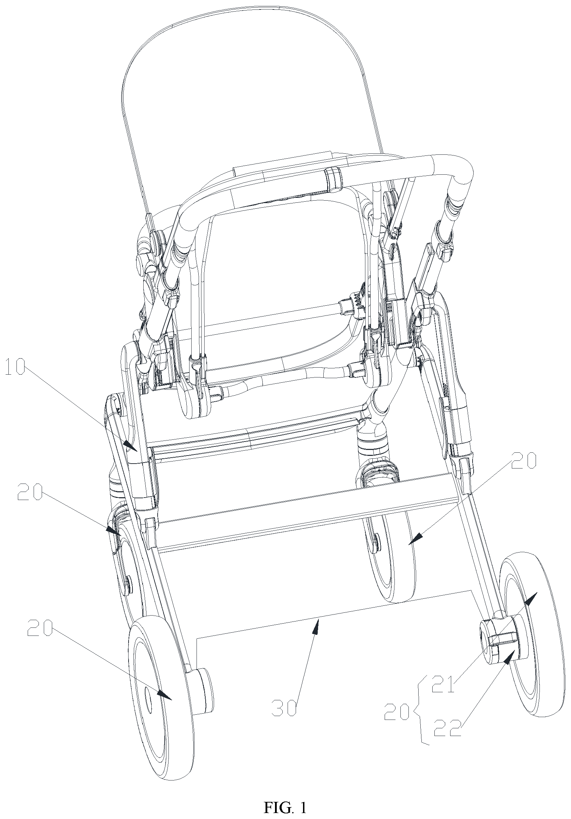

As shown in FIG. 1, an embodiment of the present disclosure provides a baby carrier, for example, a baby carriage. There is a need to only step on the brake pedal in the case of braking or unlocking of the baby carrier, which is easy to operate and may not scratch a user's shoes.

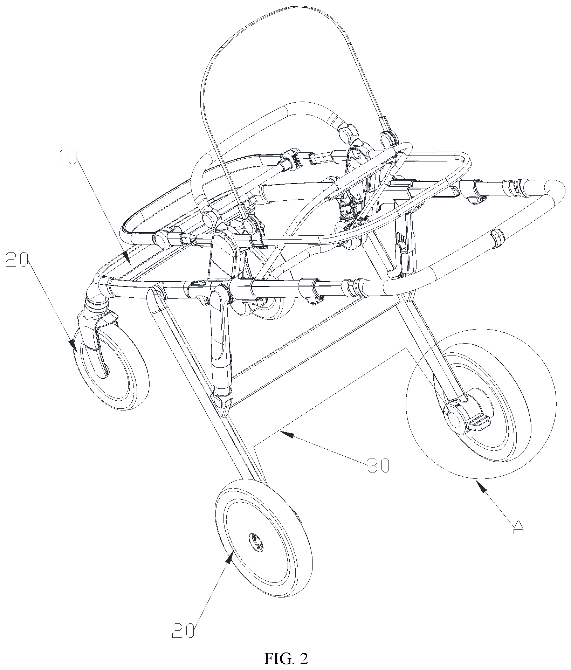

As shown in FIG. 1 and FIG. 2, the baby carrier includes a frame 10, a plurality of wheel assemblies 20 arranged at the bottom of the frame 10, and a linking member 30. In this embodiment, the baby carrier is provided with four wheel assemblies 20 including a left-front-wheel wheel assembly 20, a right-front-wheel wheel assembly 20, a left-rear-wheel wheel assembly 20, and a right-rear-wheel wheel assembly 20 respectively. The left-rear-wheel wheel assembly 20 and the right-rear-wheel wheel assembly 20 each include a wheel body 21 and a brake mechanism 22. Two ends of the linking member 30 are connected to the brake mechanisms 22 of the left-rear-wheel wheel assembly 20 and the right-rear-wheel wheel assembly 20 respectively, so as to link the two brake mechanisms 22 to be in a braking or unlocked state at the same time. In this embodiment, the linking member 30 is a steel wire. Certainly, in other embodiments, the linking member 30 may also have another linking structure.

Certainly, in other embodiments, there may be more than four wheel assemblies 20 or less than four wheel assemblies according to an actual requirement. The brake mechanism 22 may also be arranged on the left-front-wheel wheel assembly 20 or the right-front-wheel wheel assembly 20 as required.

Specifically, the brake mechanism 22 is described by taking the right-rear-wheel wheel assembly 20 as an example.

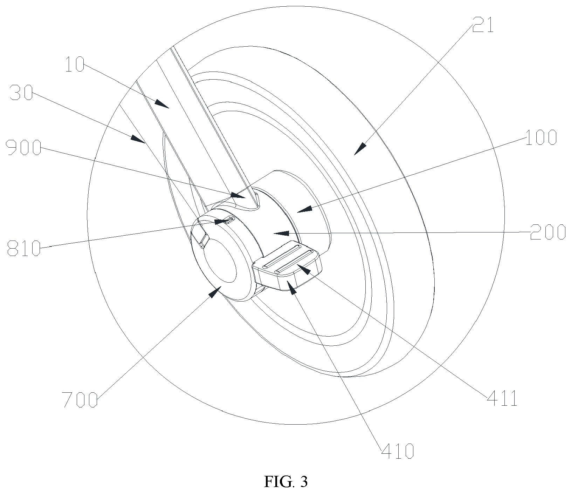

As shown in FIG. 3, FIG. 6 to FIG. 8, and FIG. 11, the brake mechanism 22 includes a hub 100, a fixed base 200, a locking assembly 300, a pedal assembly 400, a retainer 500, a first reset member 610, a second reset member 620, a decorative cover 700, and an indication assembly 800.

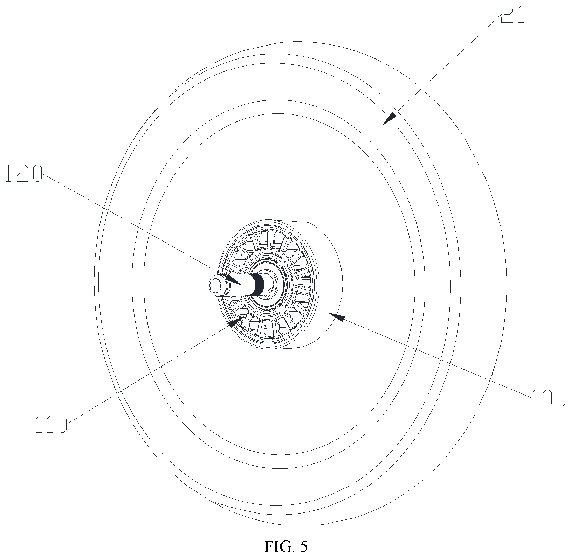

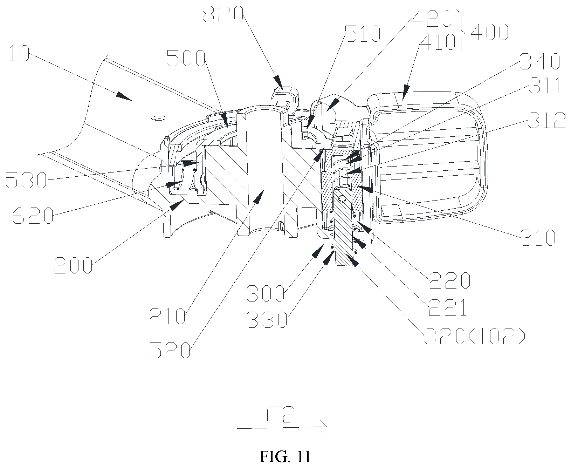

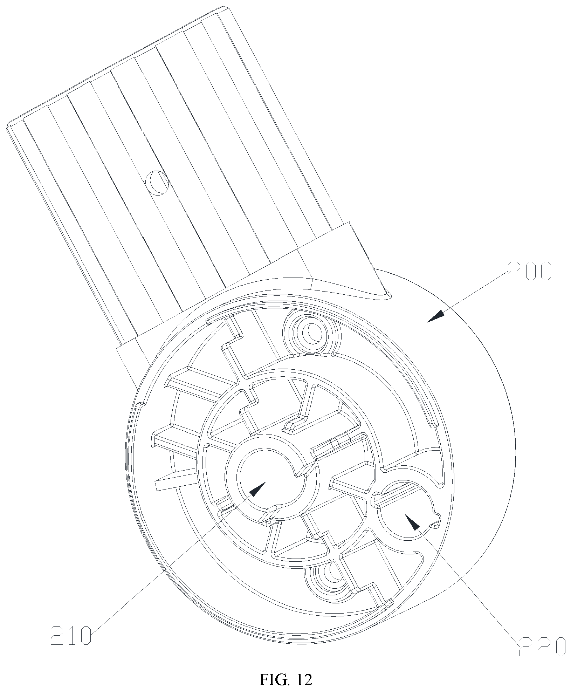

Further, as shown in FIG. 5, the wheel body 21 is arranged around the hub 100, a plurality of brake holes 110 are circumferentially evenly arranged approximately at a center of the hub 100, and a pivot shaft 120 is arranged at the center of the wheel hub 100. In another embodiment, the hub 100 is provided with one brake hole 110. As shown in FIG. 3, FIG. 6, and FIG. 12, the fixed base 200 is substantially cylindrical, and the fixed base 200 is connected to a bottom end of the frame 10 through a connector 900. In this embodiment, the fixed base 200 and the connector 900 are integrally formed. Certainly, in other embodiments, the fixed base 200 and the connector 900 may also be two mutually separated components. A pivot hole 210 that can be engaged with the pivot shaft 120 is arranged at the center of the fixed base 200. As shown in FIG. 11, a mounting groove 220 extending along an axial direction of the fixed base 200 is arranged at an off-center position of the fixed base 200, and the bottom of the mounting groove 220 is provided with a through hole 221.

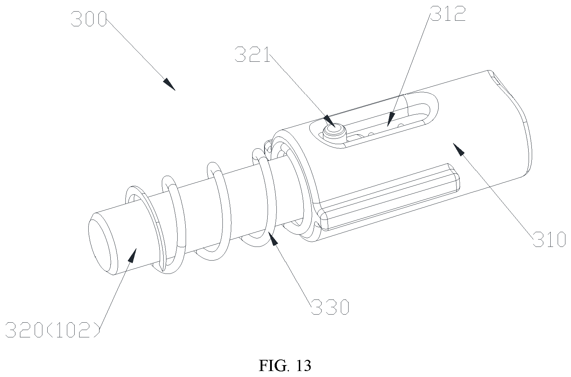

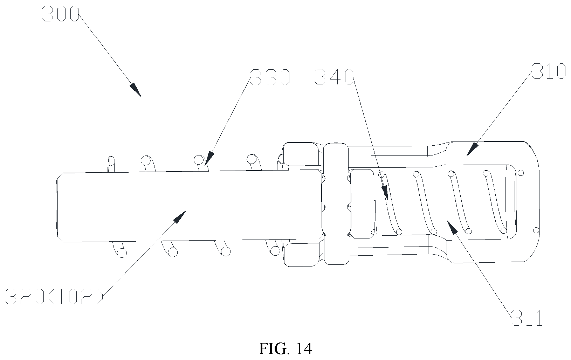

Further, as shown in FIG. 11, FIG. 13, and FIG. 14, the locking assembly 300 is movably arranged on the fixed base 200. The locking assembly 300 includes a drive member 310, a brake pin 320, a third reset member 330, and a fourth reset member 340. The drive member 310 is substantially in a columnar structure, the drive member 310 is provided with an accommodating groove 311, the brake pin 320 is movably arranged in the accommodating groove 311, and two ends of the fourth reset member 340 abut against the brake pin 320 and a base of the accommodating groove 311 respectively. Specifically, the brake pin 320 is provided with a guide post 321, a sidewall of the accommodating groove 311 is provided with a guide groove 312, and the guide post 321 is inserted into the guide groove 312 and slidable along the guide groove 312. In this way, a sliding connection between the drive member 310 and the brake pin 320 can be realized, so as to provide a certain buffering effect when the brake pin 320 is inserted into the brake hole 110, preventing accidental breakage due to misalignment during insertion of the brake pin 320 into the brake hole 110. Further, an end of the brake pin 320 away from the drive member 310 can pass through the fixed base 200 through the through hole 221 to be inserted into the brake hole 110 (as shown in FIG. 5). In this way, the fixed base 200 and the hub 100 can be locked and engaged, that is, braking of the wheel assembly 20 is realized. The third reset member 330 is arranged around the brake pin 320 and is located outside the drive member 310, and two ends of the third reset member 330 abut against a base of the mounting groove 220 and an end face of the drive member 310 respectively. The third reset member 330 causes the drive member 310 to move constantly in a direction away from the brake hole 110, that is, causes the brake pin 320 to move constantly in the direction away from the brake hole 110. In this embodiment, the third reset member 330 and the fourth reset member 340 are both springs.

Certainly, in other embodiments, the brake pin 320 and the brake hole 110 may also be replaced with other engagement structures, which may be, for example, engagement between a convex portion and a concave portion, engagement between a hook and a ring, etc. In addition, in other embodiments, positions of the brake pin 320 and the brake hole 110 may also be interchanged.

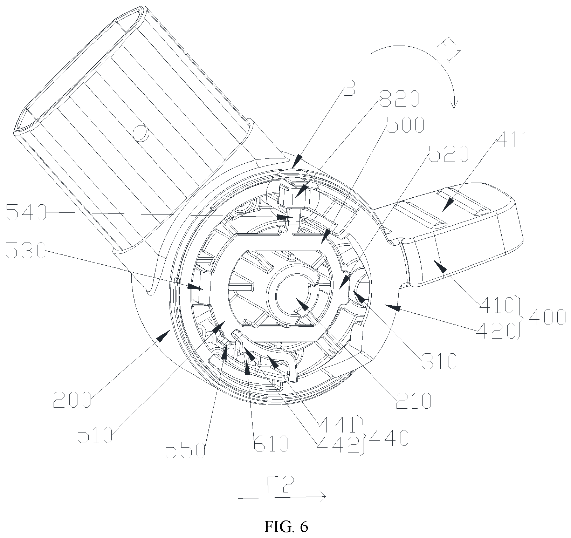

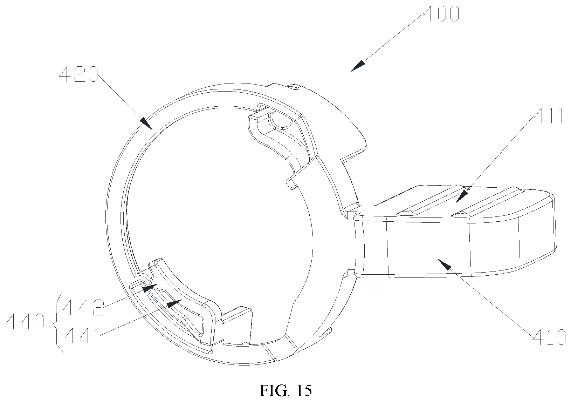

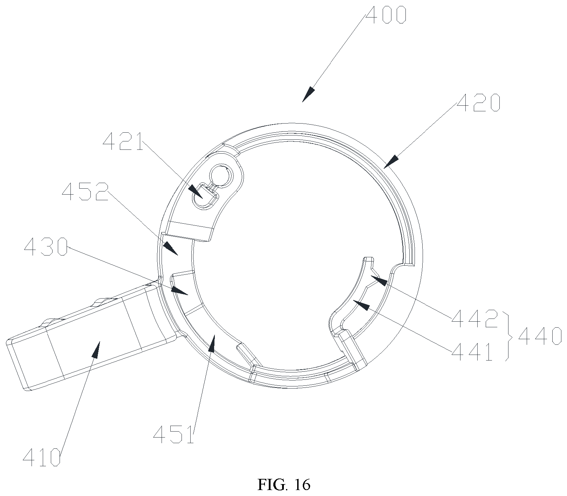

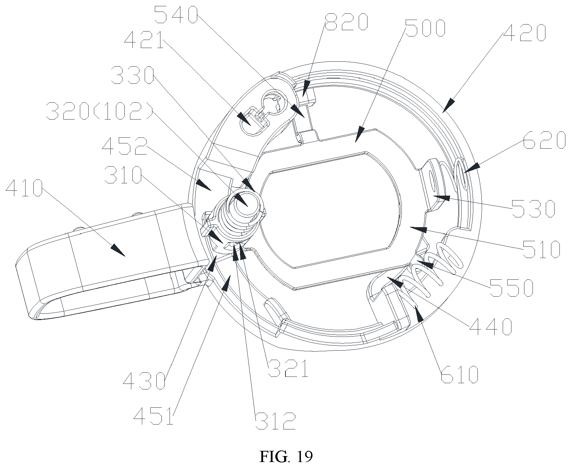

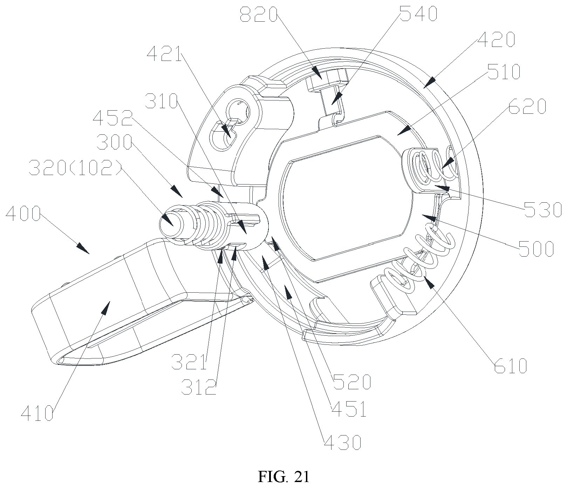

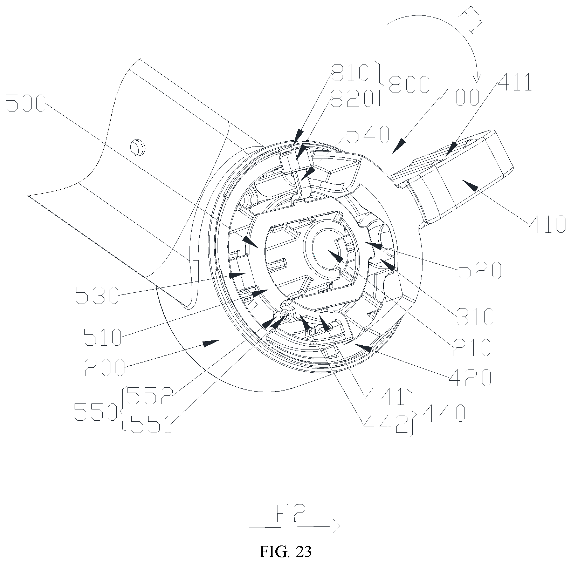

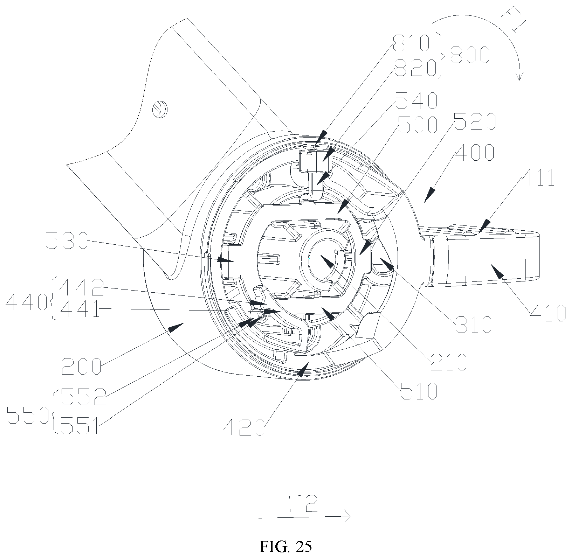

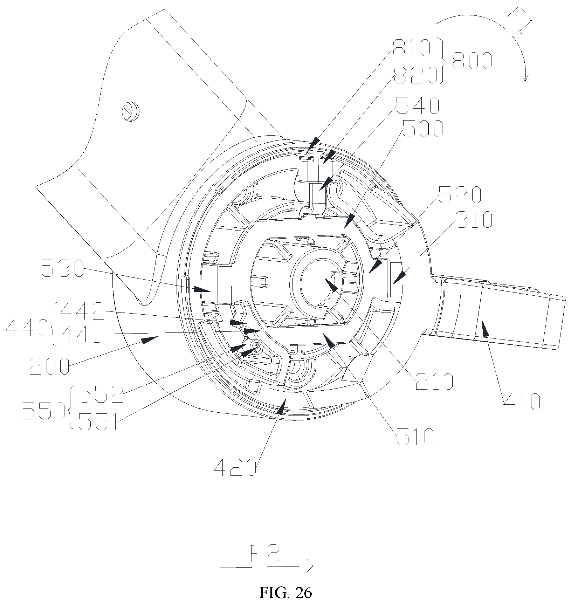

Specifically, as shown in FIG. 6, FIG. 9, FIG. 15, and FIG. 16, the pedal assembly 400 includes a pedal body 410, a rotating frame 420, and a first abutting structure 440 connected to each other. In this embodiment, the pedal body 410, the rotating frame 420, and the first abutting structure 440 are integrally formed. In other embodiments, the pedal body 410, the rotating frame 420, and the first abutting structure 440 may also be mutually separated. The rotating frame 420 is substantially of an annular structure matching a cross section of the fixed base 200, and the rotating frame 420 is rotatably arranged on a side of the fixed base 200 facing away from the hub 100. As shown in FIG. 16, a side of the rotating frame 420 facing the fixed base 200 is provided with a first plane 451, a driving inclined surface 430, and a second plane 452 connected in sequence, and the first plane 451 is far away from the fixed base 200 relative to the second plane 452. The pedal body 410 extends out of the fixed base 200, and the pedal body 410 rotates together with the rotating frame 420. The pedal body 410 has a stepping surface 411 facing away from the ground. The pedal body 410 has an original position, a middle position, and a pedal position. As shown in FIG. 23, a position when the pedal body 410 is not stressed is the original position. As shown in FIG. 26, a position when the pedal body 410 is stepped on in place is the pedal position. As shown in FIG. 25, the middle position is between the original position and the pedal position. As shown in FIG. 19 to FIG. 23, the driving inclined surface 430 can press an end of the drive member 310 away from the brake hole 110, so that the drive member 310 drives the brake pin 320 to move towards the brake hole 110. The rotating frame 420 is further provided with a first abutting structure 440 spaced apart from the driving inclined surface 430. The first abutting structure 440 includes an abutting body 441 and a first abutting portion 442 fastened to the abutting body 441. The abutting body 441 is capable of certain elastic deformation.

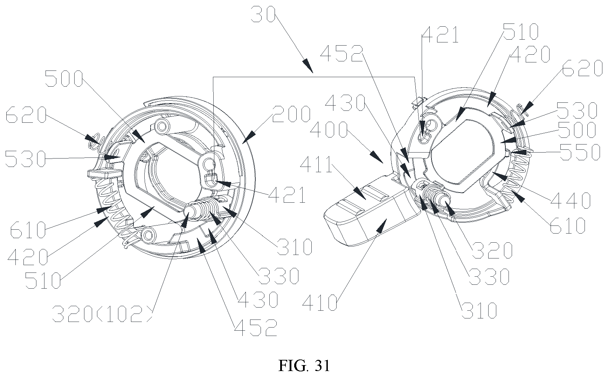

Further, as shown in FIG. 1, FIG. 16, and FIG. 29 to FIG. 31, the rotating frame 420 is provided with a mounting hole 421, and the two ends of the linking member 30 respectively pass through and are fastened to the mounting holes 421 on the left-rear-wheel wheel assembly 20 and the right-rear-wheel wheel assembly 20. In this way, simultaneous braking or unlocking of the left-rear-wheel wheel assembly 20 and the right-rear-wheel wheel assembly 20 can be realized just by stepping on the pedal body 410 of the right-rear-wheel wheel assembly 20.

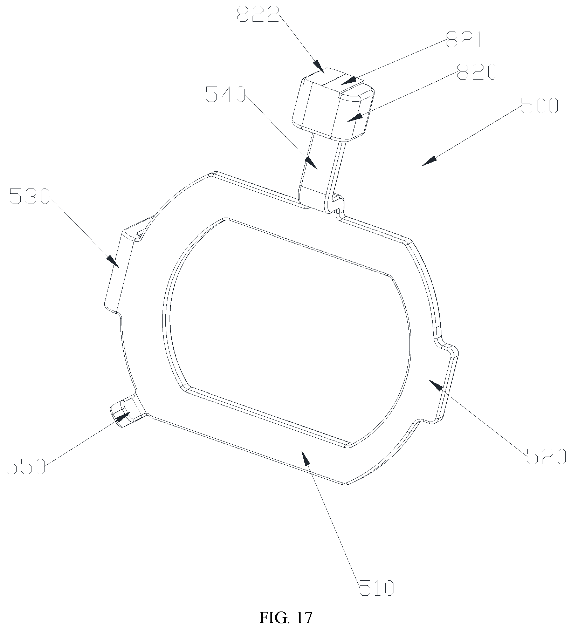

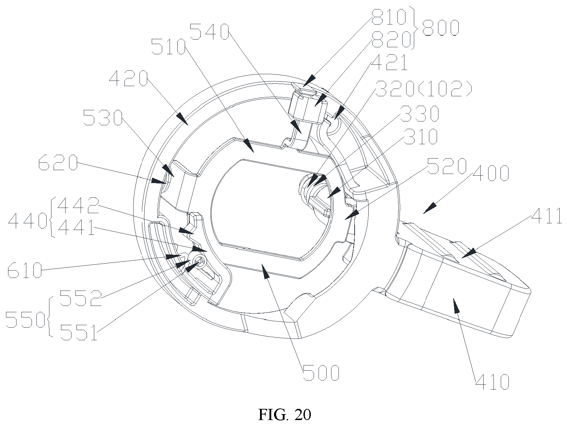

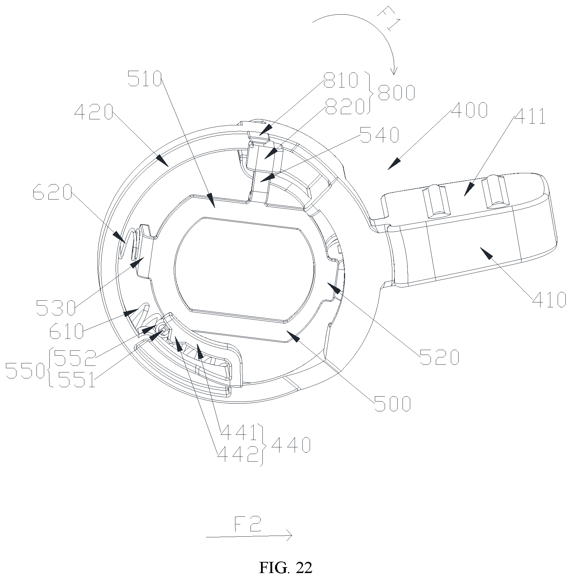

Further, as shown in FIG. 6 and FIG. 17, the retainer 500 is movably arranged on a side of the fixed base 200 facing away from the hub 100 and is located in the middle of the rotating frame 420, and a moving direction of the retainer 500 is intersected with that of the locking assembly 300. The retainer 500 includes a retaining frame 510, a first pressing portion 520, a second pressing portion 530, a connecting portion 540, and a second abutting structure 550. In this embodiment, the retaining frame 510, the first pressing portion 520, the second pressing portion 530, the connecting portion 540, and the second abutting structure 550 are integrally formed. In other embodiments, the retaining frame 510, the first pressing portion 520, the second pressing portion 530, the connecting portion 540, and the second abutting structure 550 may also be mutually separated components. The retaining frame 510 substantially has a structure of a square frame, and the first pressing portion 520 and the second pressing portion 530 are respectively arranged on opposite first and second sides of the retaining frame 510. The first pressing portion 520 can abut against a sidewall of the drive member 310 or the end of the drive member 310 away from the brake hole 110. Two ends of the second reset member 620 abut against the rotating frame 420 and the second pressing portion 530 respectively. The connecting portion 540 is arranged on a third side of the retaining frame 510, and the third side is adjacent to the first side and the second side. The second abutting structure 550 is arranged on a side of a four side of the retaining frame 510 close to the second side, and the fourth side is opposite to the third side. Optionally, as shown in FIG. 20 and FIG. 22, the second abutting structure 550 may include a second abutting portion 551 and a protective sleeve 552 sleeving the second abutting portion 551. The protective sleeve 552 is made of a cushioning material such as rubber, which can prevent abrasion caused by direct contact of the second abutting portion 551 with the first abutting portion 442. Certainly, in other embodiments, setting positions of the first pressing portion 520, the second pressing portion 530, the connecting portion 540, and the second abutting structure 550 may also be adjusted according to an actual requirement.

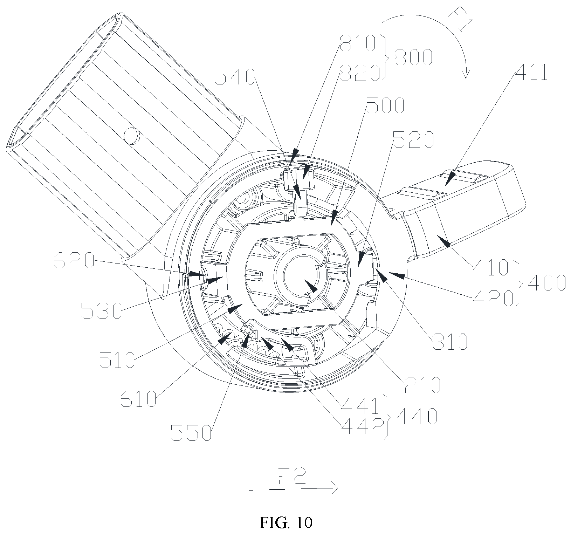

Further, the retainer 500 has a first position and a second position. As shown in FIG. 6 and FIG. 11, when the retainer 500 is at the first position, the first pressing portion 520 abuts against a sidewall of the drive member 310, the drive member 310 is at a position relatively far away from the brake hole 110 under elastic reset force of the third reset member 330, and the brake pin 320 is kept disengaged from the brake hole 110. As shown in FIG. 10, when the retainer 500 is at the second position, the first pressing portion 520 at least partially blocks the end of the drive member 310 away from the brake hole 110 to prevent the brake pin 320 from moving away from the brake hole 110, and the brake pin 320 is kept engaged with and locked with the brake hole 110. The second reset member 620 keeps the retainer 500 moving constantly towards the second position.

Further, as shown in FIG. 6, FIG. 8, and FIG. 10, two ends of the first reset member 610 abut against the fixed base 200 and the rotating frame 420 respectively, and the first reset member 610 constantly keeps the pedal assembly 400 moving towards a direction opposite to a first direction F1. In this embodiment, the first reset member 610 and the second reset member 620 are both springs. In this embodiment, the first direction F1 is a clockwise direction in FIG. 6, FIG. 8, and FIG. 10.

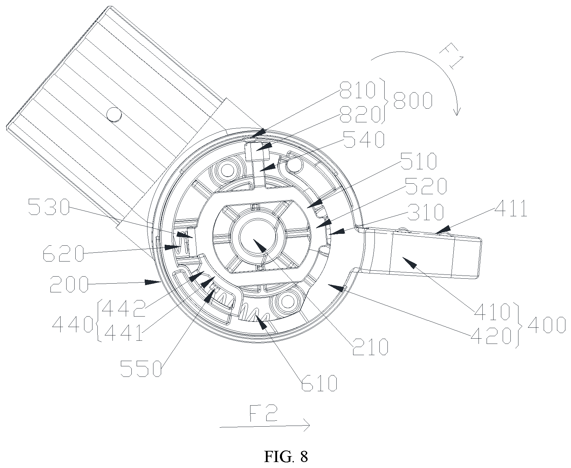

Further, as shown in FIG. 6, when the retainer 500 is at the first position, and the first plane 451 faces toward the drive member 310, force along the first direction F1 is applied to the stepping surface 411 of the pedal body 410, corresponding to stepping down on the stepping surface 411 in FIG. 6. As shown in FIG. 8, in this case, the rotating frame 420 may rotate in the clockwise direction, so that the driving inclined surface 430 abuts against the drive member 310, the drive member 310 drives the brake pin 320 to move towards a direction close to the brake hole 110, and the brake pin 320 is inserted into the brake hole 110. At the same time, the retainer 500 originally abutting against the sidewall of the drive member 310 moves to the second position in a direction close to the drive member 310 under the action of the second reset member 620, so that the first pressing portion 520 is pressed against the end of the drive member 310 away from the brake hole 110. As shown in FIG. 11, the brake pin 320 is kept engaged with and locked with the brake hole 110.

As shown in FIG. 10, when the retainer 500 is at the second position, the first abutting portion 442 abuts against the second abutting structure 550. In this case, the force along the first direction F1 is applied to the stepping surface 411 of the pedal body 410, the first abutting portion 442 on the rotating frame 420 will abut against the second abutting structure 550 on the retaining frame 510, so that the retainer 500 as a whole moves to the first position towards a direction away from the drive member 310. The drive member 310 that loses the force from the first pressing portion 520 drives the brake pin 320 to move away from the brake hole 110 under the action of the third reset member 330, and the brake pin 320 is kept disengaged from the brake hole 110, as shown in FIG. 6.

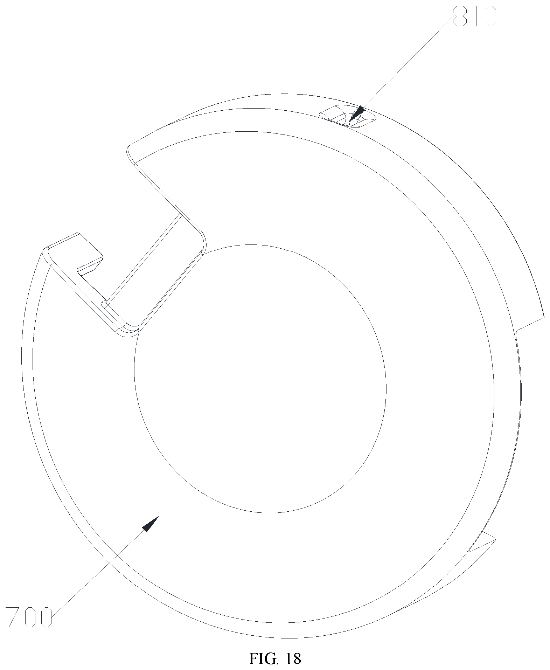

Further, as shown in FIG. 3 and FIG. 18, the decorative cover 700 covers a side of the fixed base 200 facing away from the hub 100, the decorative cover 700 and the fixed base 200 define an accommodating space, and the retainer 500, the rotating frame 420, the first abutting structure 440, the first reset member 610, and the second reset member 620 are all located in the accommodating space.

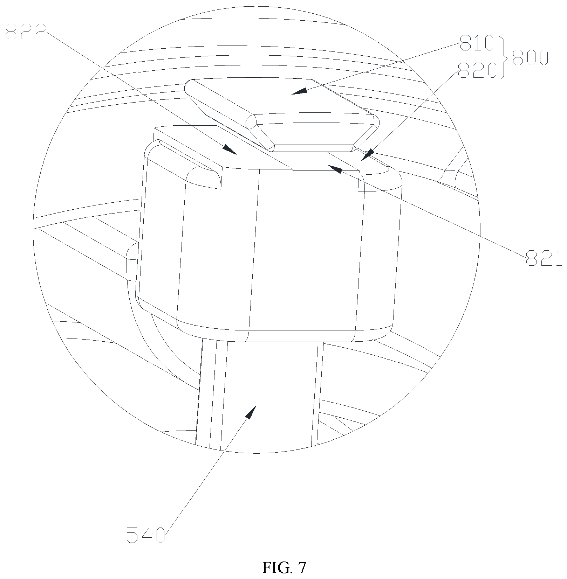

Specifically, as shown in FIG. 6 and FIG. 7, the indication assembly 800 includes an indication window 810 arranged on the decorative cover 700 and an indicator 820. The indicator 820 is fastened to the connecting portion 540. That is, the indicator 820 moves with the retainer 500. The indicator 820 has a first indication region 821 and a second indication region 822. For example, the first indication region 821 may have a green marker, and the second indication region 822 may have a red marker. When the retainer 500 is at the first position, the first indication region 821 is aligned with the indication window 810. That is, the green marker is aligned with the indication window 810, indicating that the wheel assembly 20 has been unlocked. When the retainer 500 is at the second position, the second indication region 822 is aligned with the indication window 810, indicating that the wheel assembly 20 has been braked. In this way, it is convenient for the user to determine the braking state of the wheel assembly 20, improving safety performance of the baby carrier. Certainly, in other embodiments, the indication assembly 800 in other forms may also be adopted.

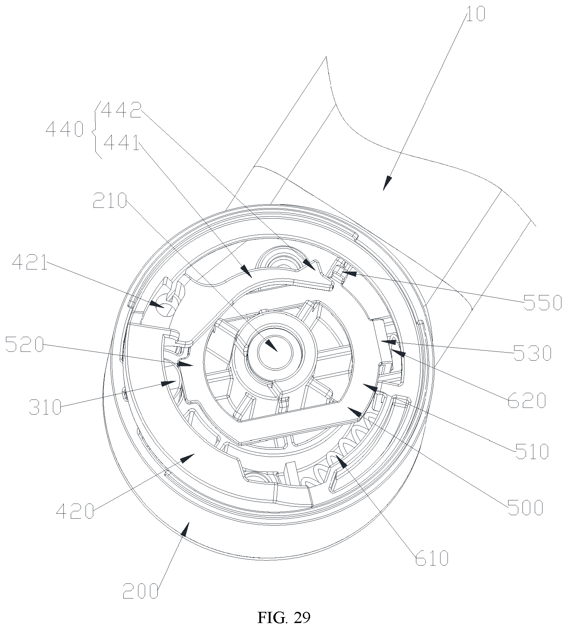

As shown in FIG. 29 to FIG. 31, the brake mechanism 22 of the left-rear-wheel wheel assembly 20 is substantially similar to the brake mechanism 22 of the right-rear-wheel wheel assembly 20, which are different in that the pedal assembly 400 of the brake mechanism 22 of the left-rear-wheel wheel assembly 20 does not have the pedal body 410 and only has the rotating frame 420 and the first abutting structure 440.

A specific operating principle of the baby carrier is described as follows.

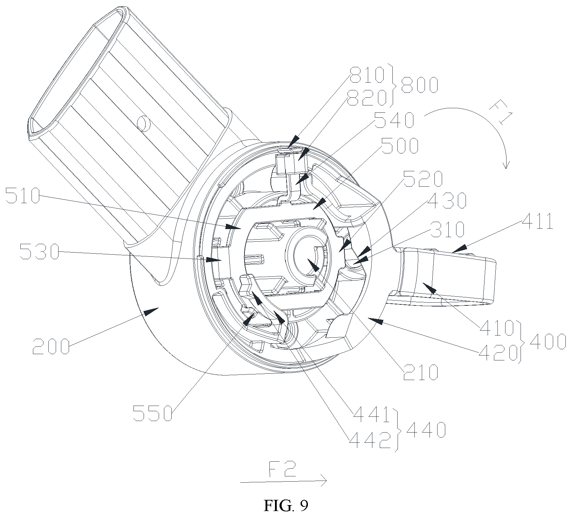

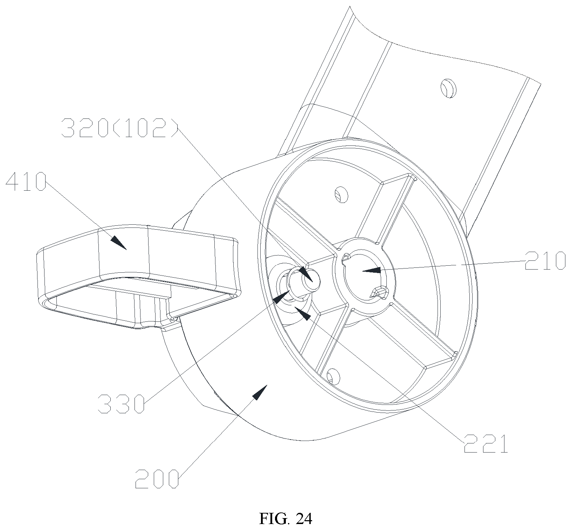

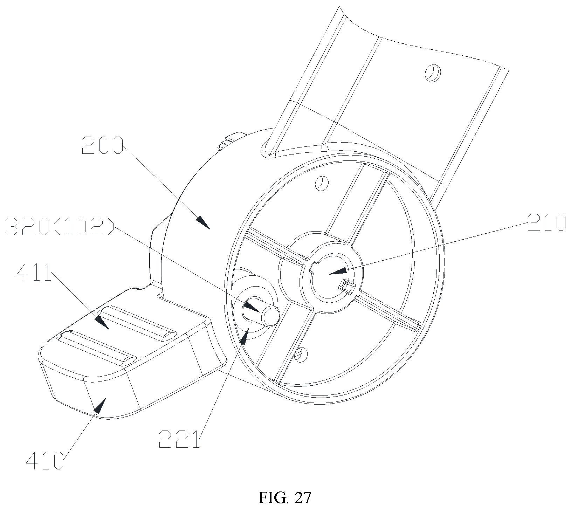

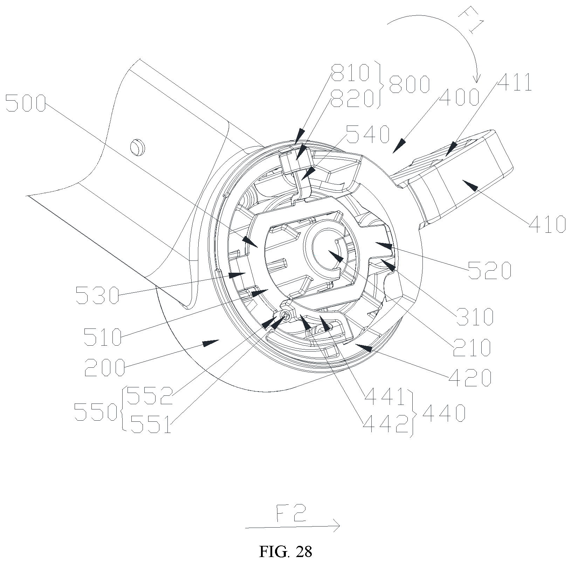

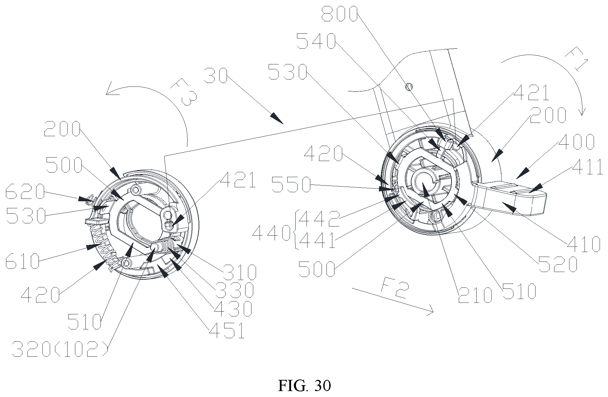

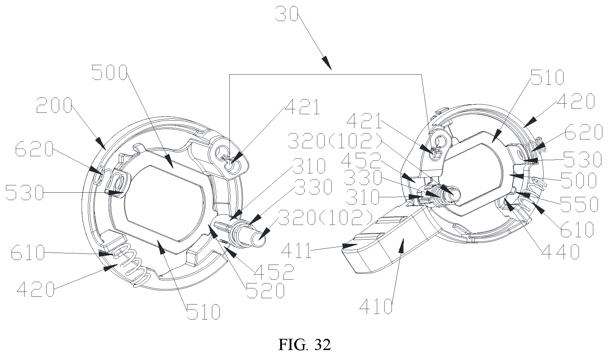

As shown in FIG. 23 and FIG. 24, the retainer 500 is at the first position, the right-rear-wheel wheel assembly 20 is in the unlocked state, the brake pin 320 is disengaged from the brake hole 110, the pedal body 410 is at the original position, and the first plane 451 on the rotating frame 420 faces toward the drive member 310. When braking is required, the user steps on the stepping surface 411, that is, applies the force along the first direction F1 to the pedal body 410, the pedal assembly 400 as a whole rotates along the first direction F1, and the first reset member 610 is compressed, as shown in FIG. 25, in which case the pedal body 410 is at the middle position and the first abutting portion 442 crosses the second abutting structure 550 from the right side of the second abutting structure 550 to the left side of the second abutting structure 550. The driving inclined surface 430 on the rotating frame 420 abuts against the drive member 310. As shown in FIG. 9, the drive member 310 drives the brake pin 320 to move towards a direction close to the brake hole 110 until the brake pin 320 is inserted into the brake hole 110, and the right-rear-wheel wheel assembly 20 is in the braking state. In this case, the third reset member 330 is compressed, and the second indication region 822 is aligned with the indication window 810. At the same time, as shown in FIG. 11 and FIG. 25, since the drive member 310 moves towards the direction close to the brake hole 110, the retainer 500 originally abutting against the sidewall of the drive member 310 moves towards a direction close to the drive member 310, that is, a second direction F2, under the action of the second reset member 620, until the first pressing portion 520 is pressed against the end of the drive member 310 away from the brake hole 110, so that the brake pin 320 and the brake hole 110 are kept in a locking and engagement state. As shown in FIG. 26 and FIG. 27, in this case, the pedal body 410 is at the stepping position, and the second plane 452 on the rotating frame 420 faces toward the drive member 310. When the user no longer steps on the stepping surface 411, that is, cancels the force applied to the pedal body 410, the pedal assembly 400 rotates along the direction opposite to the first direction F1 under elastic force of the first reset member 610, the pedal body 410 returns to the original position, and the first plane 451 on the rotating frame 420 faces toward the drive member 310, as shown in FIG. 28. When the pedal assembly 400 returns to the original position, abutting force of the abutting body 441 is insufficient to cause the second abutting structure 550 to move. Therefore, the first abutting portion 442 crosses the second abutting structure 550 from the left side of the second abutting structure 550 to the right side of the second abutting structure 550 without changing the position of the retainer 500, so that the right-rear-wheel wheel assembly 20 is kept in a locked state. At the same time, as shown in FIG. 30 to FIG. 32, when the pedal assembly 400 of the right-rear-wheel wheel assembly 20 performs the above actions, the linking member 30 drives the brake mechanism 22 of the left-rear-wheel wheel assembly 20 to reversely rotate, thereby linking other similar components on the brake mechanism 22 of the left-rear-wheel wheel assembly 20 to move so as to transit from the unlocked state to the locked state. For example, when the pedal assembly 400 of the right-rear-wheel wheel assembly 20 in FIG. 30 rotates along the first direction F1 under force, the rotating frame 420 of the left-rear-wheel wheel assembly 20 rotates along a third direction F3 under traction of the linking member 30.

As shown in FIG. 28, when the wheel assembly 20 is required to be unlocked again, the user steps on the stepping surface 411 to cause the pedal body 410 to move to the stepping position again, that is, applies the force along the first direction F1 to the pedal body 410 again, the pedal assembly 400 as a whole rotates along the first direction F1, and the first reset member 610 is compressed. The first abutting portion 442 on the rotating frame 420 abuts against the second abutting structure 550 on the retainer 500, so that the retainer 500 as a whole moves to the first position towards the direction away from the drive member 310, that is, a direction opposite to the second direction F2, and the second reset member 620 is compressed. The drive member 310 that loses the force from the first pressing portion 520 drives, under the elastic force of the third reset member 330, the brake pin 320 to move away from the brake hole 110 until the brake pin 320 is disengaged from the brake hole 110, the wheel assembly 20 is in the unlocked state, and the first indication region 821 is aligned with the indication window 810. When the user no longer steps on the stepping surface 411, that is, cancels the force applied to the pedal body 410, the pedal assembly 400 rotates along the direction opposite to the first direction F1 under the elastic force of the first reset member 610, and the pedal body 410 returns to the original position, as shown in FIG. 23. In this case, the drive member 310 has returned to the unlocked state away from the brake hole 110 under the action of the third reset member 330, the retainer 500 moves towards the direction close to the drive member 310 under the action of the second reset member 620, and the first pressing portion 520 abuts against the sidewall of the drive member 310, that is, the retainer 500 is at the first position. Therefore, the brake pin 320 and the brake hole 110 are kept in a disengaged state. In this case, the first pressing portion 520 abuts against the sidewall of the drive member 310, so that the retainer 500 is at the first position relatively to the left. Therefore, compared with a situation where the retainer 500 is at the second position relatively to the right, a distance between the second abutting structure 550 on the retainer 500 and the first abutting portion 442 on the rotating frame 420 is greater. In this way, when braking is required again and the pedal body 410 is stepped, the first abutting portion 442 may cross the second abutting structure 550 instead of abutting against the second abutting structure 550, so that, after the driving inclined surface 430 can act on the drive member 310, the first pressing portion 520 can be pressed against the end of the drive member 310 away from the brake hole 110 again to prevent the brake pin 320 from moving towards a direction away from the brake hole 110. Similarly, the brake mechanism 22 of the left-rear-wheel wheel assembly 20 is driven by the linking member 30 to realize transition from the locked state to the unlocked state through a similar structure.

According to the brake mechanism 22, through ingenious structural design, in the case of braking or unlocking of the wheel assembly 20, there is a need to only step on the pedal body 410. After completion of the braking or unlocking, a corresponding structure, such as the retainer 500, is provided so that the wheel assembly 20 is kept in the braking or unlocked state, while the pedal body 410 can return to a relatively upper position available for stepping under the action of the first reset member 610 without affecting the braking or unlocked state of the wheel assembly 20.

The brake mechanism 22 and the baby carrier bring at least the following beneficial effects.

In the brake mechanism 22, when braking is required, only force along the first direction F1 is required to be applied to the pedal assembly 400. For example, the user performs a stepping action, and the retainer 500 moves from the first position to the second position, so that the second engagement portion 102 and the first engagement portion 101 (the brake pin 320 and the brake hole 110 in this embodiment) are kept locked and engaged. That is, the hub 100 and the fixed base 200 are in a braking state. Then, the pedal assembly 400 may move and reset in the direction opposite to the first direction F1 under the action of the first reset member 610. Therefore, when unlocking is required, only the force along the first direction F1 is required to be applied to the pedal assembly 400 again. For example, the user performs a stepping action, and the retainer 500 moves from the second position to the first position, so that the first engagement portion 101 and the second engagement portion 102 (the brake hole 110 and the brake pin 320 in this embodiment) are kept disengaged. That is, the hub 100 and the fixed base 200 are in an unlocked state. Then, the pedal assembly 400 may move and reset in the direction opposite to the first direction F1 under the action of the first reset member 610 again. Therefore, in the brake mechanism 22, only the brake pedal is required to be stepped on regardless of braking or unlocking, which is convenient to operate and may not scratch the user's shoes.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

## Claims

1. A brake mechanism (22), comprising:
a hub (100) provided with a first engagement portion (101);
a fixed base (200) fastened to the hub (100);
a second engagement portion (102) movably arranged on the fixed base (200), and capable of being engaged with and locked with the first engagement portion (101); and
a retainer (500) movably arranged on the fixed base (200), and having a first position and a second position, wherein the second engagement portion (102) is kept disengaged from the first engagement portion (101) when the retainer (500) is at the first position, and the second engagement portion (102) is kept engaged with and locked with the first engagement portion (101) when the retainer (500) is at the second position;
wherein a moving direction of the retainer (500) is intersected with a moving direction of the second engagement portion (102).

2. The brake mechanism (22) according to claim 1, wherein when the retainer (500) is at the second position, the retainer (500) acts on the second engagement portion (102) to cause the second engagement portion (102) to move in a direction close to the first engagement portion (101).

3. The brake mechanism (22) according to claim 1 or claim 2, further comprising:
a pedal assembly (400), wherein when the retainer (500) is at the first position, and a force along a first direction is applied to the pedal assembly (400), the retainer (500) moves from the first position to the second position, and when the retainer (500) is at the second position, and the force along the first direction is applied to the pedal assembly (400), the retainer (500) moves from the second position to the first position; and
a first reset member (610) keeping the pedal assembly (400) moving in a direction opposite to the first direction.

4. The brake mechanism (22) according to claim 3, wherein the pedal assembly (400) includes a pedal body (410) and a first abutting portion (442) connected to each other, the retainer (500) has a second abutting structure (550), and the first abutting portion (442) abuts against the second abutting structure (550) when the retainer (500) is at the second position.

5. The brake mechanism (22) according to claim 4, wherein the pedal assembly (400) includes a driving inclined surface (430) connected to the pedal body (410), and when the retainer (500) is at the first position, and the force along the first direction is applied to the pedal body (410), the driving inclined surface (430) moves along the first direction and drives the second engagement portion (102) to be engaged with and locked with the first engagement portion (101).

6. The brake mechanism (22) according to any of the preceding claims, further comprising a second reset member (620) keeping the retainer (500) moving towards the second position.

7. The brake mechanism (22) according to claim 4 or claim 5, wherein the pedal assembly (400) further includes a rotating frame (420) connected to the pedal body (410), the rotating frame (420) is rotatably arranged on the fixed base (200), the first abutting portion (442) is arranged on the rotating frame (420), the rotating frame (420) is further provided with a driving inclined surface (430) spaced apart from the first abutting portion (442), and when the retainer (500) is at the first position, and the force along the first direction is applied to the pedal body (410), the driving inclined surface (430) moves along the first direction and drives the second engagement portion (102) to be engaged with and locked with the first engagement portion (101).

8. The brake mechanism (22) according to any of the preceding claims, wherein the first engagement portion (101) is a brake hole (110) arranged on the hub (100), and the second engagement portion (102) is a brake pin (320) movably arranged on the fixed base (200), the brake pin (320) being capable of being inserted into the brake hole (110).

9. The brake mechanism (22) according to claim 8, further comprising a drive member (310) arranged at an end of the brake pin (320) away from the brake hole (110), and the retainer (500) abuts against an end of the drive member (310) away from the brake hole (110) when the retainer (500) is at the second position.

10. The brake mechanism (22) according to claim 9, further comprising a third reset member (330) arranged around the brake pin (320), two ends of the third reset member (330) abutting against the fixed base (200) and the drive member (310) respectively.

11. The brake mechanism (22) according to claim 9 or 10, wherein the brake pin (320) is provided with a guide post (321), and the drive member (310) is provided with a guide groove (312), the guide post (321) being inserted into the guide groove (312) and slidable along the guide groove (312).

12. The brake mechanism (22) according to any of the claims 9 to 11, further comprising a fourth reset member (340), wherein the drive member (310) is provided with an accommodating groove (311), the brake pin (320) is movably arranged in the accommodating groove (311), and two ends of the fourth reset member (340) abut against the brake pin (320) and a base of the accommodating groove (311), respectively.

13. The brake mechanism (22) according to any of the preceding claims, further comprising an indication assembly (800) adapted to be in a first indication state when the retainer (500) is at the first position, and to be in a second indication state when the retainer (500) is at the second position.

14. The brake mechanism (22) according to claim 13, further comprising a decorative cover (700) covering the fixed base (200), wherein the indication assembly (800) includes an indication window (810) arranged on the decorative cover (700) and an indicator (820) fastened to the retainer (500), wherein the indicator (820) has a first indication region (821) and a second indication region (822), wherein the first indication region (821) is aligned with the indication window (810) when the retainer (500) is at the first position, and the second indication region (822) is aligned with the indication window (810) when the retainer (500) is at the second position.

15. A baby carrier, comprising:
two wheel assemblies (20) each provided with the brake mechanism (22) according to any of the preceding claims; and
a linking member (30), two ends of the linking member (30) being connected to the pedal assemblies (400) of the two wheel assemblies (20), respectively.
